# EUROPEAN PATENT APPLICATION

(11) **EP 4 467 669 A1**
(43) Date of publication of application: **27.11.2024**
(21) Application number: 23749603.9
(22) Date of filing: 24.01.2023
(51) Int. Cl.: C21D 8/12, C22C 38/00, C22C 38/06, C22C 38/60, H01F 1/147

(54) **METHOD FOR MANUFACTURING HOT-ROLLED STEEL SHEET FOR NON-ORIENTED ELECTRICAL STEEL SHEET, METHOD FOR MANUFACTURING NON-ORIENTED ELECTRICAL STEEL SHEET, AND HOT-ROLLED STEEL SHEET FOR NON-ORIENTED ELECTRICAL STEEL SHEET**

(30) Priority: 01.02.2022 JP 2022014498
(71) Applicant: JFE Steel Corporation, Tokyo 100-0011 (JP)
(72) Inventor: OKUBO, Tomoyuki, Tokyo 100-0011 (JP); SAITO, Hayato, Tokyo 100-0011 (JP); SUEHIRO, Ryuichi, Tokyo 100-0011 (JP); UENO, Masayasu, Tokyo 100-0011 (JP); YAMAGUCHI, Shinya, Tokyo 100-0011 (JP)
(74) Representative: Haseltine Lake Kempner LLP
(86) International application number: PCT/JP2023/002156
(87) International publication number: WO 2023/149287

(57) **Abstract**

Ridging caused when handling steel containing a large amount of alloying elements such as Si and Al in a low-speed hot rolling process is suppressed. A method of producing a hot-rolled steel sheet for a non-oriented electrical steel sheet comprises: producing a steel slab having a certain chemical composition and a thickness of 50 mm or more and 200 mm or less by continuous casting; conveying the steel slab to a hot rolling line while maintaining a surface temperature of the steel slab at 800 °C or more; and performing hot rolling in which the steel slab is sequentially subjected to rough rolling, reheating treatment, and finish rolling in the hot rolling line to obtain a hot-rolled steel sheet, wherein the hot rolling is performed under the following conditions (1) to (4):
(1) a delivery-side speed of the rough rolling: 100 mpm or less,
(2) a rolling reduction rate in a final pass of the rough rolling: 45 % or more,
(3) an average heating rate in the reheating treatment: 9 °C/s or more, and
(4) a temperature rise in the reheating treatment: 30 °C or more.

## Description

### TECHNICAL FIELD

The present disclosure relates to a method of producing a hot-rolled steel sheet for a non-oriented electrical steel sheet, a method of producing a non-oriented electrical steel sheet, and a hot-rolled steel sheet for a non-oriented electrical steel sheet.

### BACKGROUND

Non-oriented electrical steel sheets are a material used for iron cores of motors and generators. In recent years, there is a strong need to enhance the efficiency of electrical devices from the perspective of reducing CO₂, and non-oriented electrical steel sheets as an iron core material are required to have lower iron loss. Hence, efforts are being made to reduce eddy current loss by reducing the sheet thickness and increasing the contents of Si, Al, and Mn which are elements that enhance the electrical resistance of the steel sheet. Since such reduction in sheet thickness and increase in the amount of alloying elements significantly increase the production costs of non-oriented electrical steel sheets, the need for cost reduction is growing, too.

An example of technique for cost reduction of non-oriented electrical steel sheets is hot direct rolling. With hot direct rolling, the heat energy of a continuously cast slab can be used effectively, and there is no need to reheat a cold slab before hot rolling. This considerably reduces energy costs and also contributes to CO₂ reduction.

As an example of using hot direct rolling, JP 2002-206114 A (PTL 1) proposes a technique in which a thin slab of 30 mm to 140 mm in thickness obtained by continuous casting is continuously hot rolled to produce a hot-rolled steel sheet of 0.7 mm to 4.5 mm in thickness.

### CITATION LIST

### Patent Literature

PTL 1: JP 2002-206114 A

### SUMMARY

### (Technical Problem)

Energy saving by hot direct rolling can be achieved through the use of thin slab casters, i.e. equipment that integrates continuous casting and hot rolling mills. The technique described in PTL 1 is considered to be able to be implemented by using thin slab casters.

In some thin slab casters, a continuously cast slab is, without being cut, fed to a hot rolling process and continuously hot rolled in order to minimize unsteady parts in hot rolling and improve the yield rate. In such a case, the sheet passing speed is limited by the casting speed, so that the hot rolling speed, especially the rough hot rolling speed, is significantly lower than that in conventional processes other than hot direct rolling.

We examined such a low-speed hot rolling process, and found that, particularly with steel containing a large amount of alloying elements such as Si and Al, recrystallization during hot-rolled sheet annealing is difficult and the resulting non-oriented electrical steel sheet tends to have ridging (surface waviness).

It could therefore be helpful to suppress ridging that occurs when steel contains a large amount of Si and Al as alloying elements in a low-speed hot rolling process.

### (Solution to Problem)

Upon careful examination, we discovered that ridging can be suppressed by increasing the rolling reduction rate in the final pass of rough rolling and controlling the reheating conditions after rough rolling.

The present disclosure is based on this discovery. We thus provide the following.
1. A method of producing a hot-rolled steel sheet for a non-oriented electrical steel sheet, the method comprising: producing a steel slab with a thickness of 50 mm or more and 200 mm or less by continuous casting, the steel slab having a chemical composition that contains (consists of), in mass%, Si: 2.0 % or more and 5.0 % or less and Al: 3.0 % or less and in which a total content of Si and Al is 3.5 % or more; conveying the steel slab to a hot rolling line while maintaining a surface temperature of the steel slab at 800 °C or more; and performing hot rolling in which the steel slab is sequentially subjected to rough rolling, reheating treatment, and finish rolling in the hot rolling line to obtain a hot-rolled steel sheet, wherein the hot rolling is performed under the following conditions (1) to (4):
   (1) a delivery-side speed of the rough rolling: 100 mpm or less,
   (2) a rolling reduction rate in a final pass of the rough rolling: 45 % or more,
   (3) an average heating rate in the reheating treatment: 9 °C/s or more, and
   (4) a temperature rise in the reheating treatment: 30 °C or more.
2. The method of producing a hot-rolled steel sheet for a non-oriented electrical steel sheet according to claim 1, wherein the finish rolling is performed so that the hot-rolled steel sheet has a sheet thichness of 1.5 mm or less.
3. The method of producing a hot-rolled steel sheet for a non-oriented electrical steel sheet according to 1. or 2., wherein the chemical composition of the steel slab further contains, in mass%, at least one selected from the group consisting of C: 0.005 % or less, Mn: 3.0 % or less, Cr: 3.0 % or less, Ni: 2.0 % or less, Cu: 2.0 % or less, P: 0.2 % or less, S: 0.0050 % or less, N: 0.0050 % or less, O: 0.0050 % or less, Ti: 0.0040 % or less, Sn: 0.20 % or less, Sb: 0.20 % or less, Mo: 0.10 % or less, Ca: 0.01 % or less, REM: 0.05 % or less, Mg: 0.01 % or less, and Zn: 0.01 % or less, with a balance consisting of Fe and inevitable impurities.
4. The method of producing a hot-rolled steel sheet for a non-oriented electrical steel sheet according to 3., wherein the chemical composition further contains, in mass%, at least one selected from the group consisting of Nb: 0.005 % or less, V: 0.02 % or less, Ta: 0.002 % or less, B: 0.002 % or less, Ga: 0.005 % or less, Pb: 0.002 % or less, W: 0.05 % or less, Ge: 0.05 % or less, As: 0.05 % or less, and Co: 0.05 % or less.
5. A method of producing a non-oriented electrical steel sheet, the method comprising: producing a hot-rolled steel sheet by the method of producing a hot-rolled steel sheet for a non-oriented electrical steel sheet according to any one of 1. to 4.; subjecting the hot-rolled steel sheet to hot-rolled sheet annealing; subjecting the hot-rolled steel sheet to cold rolling to obtain a cold-rolled steel sheet; and subjecting the cold-rolled steel sheet to final annealing.
6. A hot-rolled steel sheet for a non-oriented electrical steel sheet obtainable by the method of producing a hot-rolled steel sheet for a non-oriented electrical steel sheet according to any one of 1. to 4., wherein a number density of inclusions with an equivalent circular diameter of 0.3 µm or more and 1.0 µm or less is 9/mm² or more.

### (Advantageous Effect)

It is thus possible to effectively suppress ridging under such conditions where the total content of Si and Al is as high as 3.5 % or more and the delivery-side (exit-side) speed of rough rolling is 100 mpm or less. Hence, a non-oriented electrical steel sheet with low iron loss and free from ridging can be produced using hot direct rolling which is a low energy consumption process. The present disclosure is therefore very useful from the perspective of Sustainable Development Goals (SDGs).

### BRIEF DESCRIPTION OF THE DRAWINGS

In the accompanying drawings:
FIG. 1 is a graph illustrating the correlation between the total content (mass%) of Si and Al in a slab and the arithmetic mean waviness Wa (µm) in the width direction of a non-oriented electrical steel sheet;
FIG. 2 is a graph illustrating the correlation between the delivery-side speed (mpm) in the final pass of rough rolling and the arithmetic mean waviness Wa (µm) in the width direction of a non-oriented electrical steel sheet;
FIG. 3 is a graph illustrating the correlation between the average heating rate (°C/s) in reheating treatment and the rolling reduction rate (%) in the final pass of rough rolling and the arithmetic mean waviness Wa (µm) in the width direction of a non-oriented electrical steel sheet;
FIG. 4 is a graph illustrating the correlation between the finish thickness (mm) in hot rolling and the arithmetic mean waviness Wa (µm) in the width direction of a non-oriented electrical steel sheet; and
FIG. 5 is a graph illustrating the correlation between the number density (/mm²) of inclusions with an equivalent circular diameter of 0.3 µm or more and 1.0 µm or less and the arithmetic mean waviness Wa (µm) in the width direction of a non-oriented electrical steel sheet.

### DETAILED DESCRIPTION

The present disclosure will be described in detail below together with the reasons for its limitations. In the specification and drawings, "%" as a unit of content refers to "mass%" unless otherwise specified. The unit "mpm" of sheet passing speed denotes meter per minute.

### (Experiment 1)

First, slabs of 130 mm in thickness having a chemical composition containing C: 0.002 %, Si: 1.8 % to 4.0 %, Al: 0.2 % to 1.1 %, Mn: 0.6 %, Cr: 0.01 %, Ni: 0.01 %, Cu: 0.01 %, P: 0.01 %, S: 0.002 %, N: 0.002 %, O: 0.001 %, and Ti: 0.001 % with the balance consisting of Fe and inevitable impurities were each prepared by steelmaking in a vacuum melting furnace, taken out of the furnace, and then conveyed to an electric furnace so that the surface temperature of the slab would not fall below 800 °C. The slab was subjected to temperature holding treatment at 1100 °C for 30 minutes in the electric furnace, and then taken out of the electric furnace and hot rolled to obtain a hot-rolled steel sheet.

In the hot rolling, the slab was first reduced in thickness to 20 mm by four passes of hot rolling corresponding to rough rolling, then reheated from 1000 °C to 1100 °C at 5 °C/s using an induction heater, and subsequently reduced in thickness to 1.2 mm by six passes corresponding to finish rolling.

In the hot rolling, one of the following two hot rolling speeds was used:
(1) Low-speed rolling:
   In order to simulate low-speed hot rolling of thin slab casters, the entry-side speed in the first pass of rolling was 5 mpm, and the subsequent rolling speed was 130 mm/(entry-side sheet thickness) × 5 mpm. That is, the delivery-side speed in the final pass of rough rolling was 32.5 mpm. All passes of finish rolling were performed at 200 mpm.
(2) High-speed rolling:
   In order to simulate typical rough hot rolling, all passes of rough rolling were performed at 120 mpm. All passes of finish rolling were performed at 200 mpm.

The obtained hot-rolled steel sheet was subjected to hot-rolled sheet annealing at 1050 °C for 20 seconds, and then cold rolled to obtain a cold-rolled steel sheet with a final sheet thickness of 0.25 mm. The cold-rolled steel sheet was subjected to final annealing at 980 °C for 15 seconds to obtain a non-oriented electrical steel sheet. Since a ridging pattern was visually observed in part of the obtained non-oriented electrical steel sheet, the arithmetic mean waviness Wa in the width direction of the non-oriented electrical steel sheet was measured using a contact roughness meter.

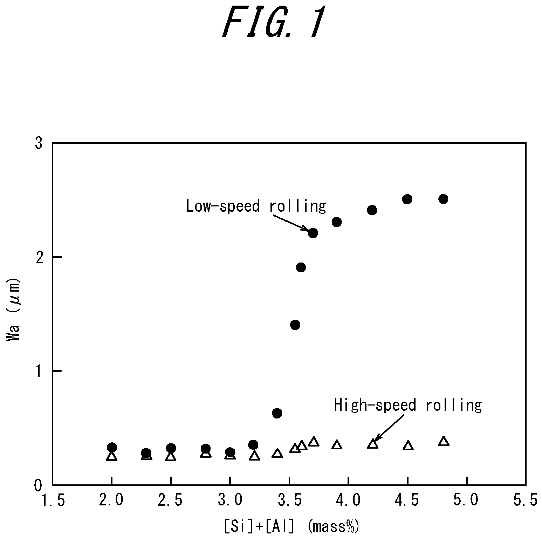

FIG. 1 is a graph illustrating the relationship between the measured arithmetic mean waviness Wa (µm) and the total content of Si and Al in the slab. In the following description, the Si content in the slab is denoted by [Si], the Al content in the slab is denoted by [Al], and the total content of Si and Al in the slab is denoted by [Si] + [Al],

As illustrated in FIG. 1, when [Si] + [Al] was 3.5 % or more, Wa increased significantly under the low-speed rolling conditions. This increase in Wa indicates the occurrence of ridging. Checking the microstructure, after hot-rolled sheet annealing, of each sample in which ridging occurred revealed that the recrystallization ratio was low. This result demonstrates that, in the case where a slab containing a large amount of Si and Al is hot rolled at low speed, recrystallization during hot-rolled sheet annealing does not proceed sufficiently and ridging occurs during subsequent cold rolling.

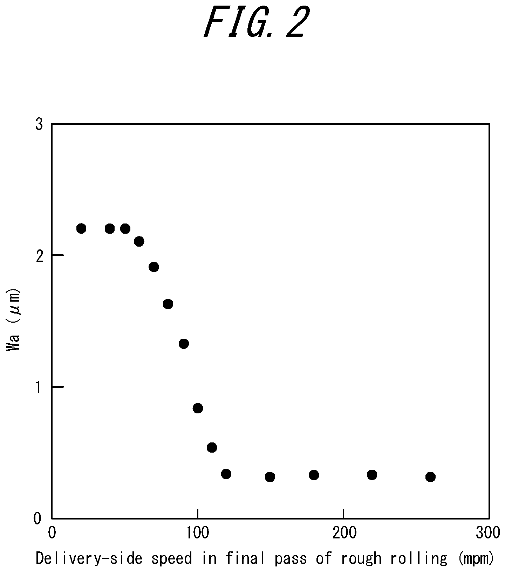

FIG. 2 illustrates the results of using steel slabs with [Si] + [Al] = 3.92 % and varying the delivery-side speed in the final pass of rough rolling. When the delivery-side speed in the final pass of rough rolling was 100 mpm or less, ridging tended to occur in the resulting non-oriented electrical steel sheet.

### (Experiment 2)

Next, in order to suppress ridging that occurs in the case where the delivery-side speed in the final pass of rough rolling is low, we looked at the pass schedule of rough rolling and the heating rate of reheating after rough rolling and conducted the following experiment.

Slabs of 130 mm in thickness having a chemical composition containing C: 0.002 %, Si: 3.31 %, Al: 0.82 %, Mn: 0.45 %, Cr: 0.05 %, Ni: 0.03 %, Cu: 0.05 %, P: 0.01 %, S: 0.002 %, N: 0.002 %, O: 0.001 %, and Ti: 0.001 % with the balance consisting of Fe and inevitable impurities were each prepared by steelmaking in a vacuum melting furnace, taken out of the furnace, and then conveyed to an electric furnace so that the surface temperature of the slab would not fall below 800 °C. The slab was subjected to temperature holding treatment at 1100 °C for 30 minutes in the electric furnace, and then taken out of the electric furnace and hot rolled to obtain a hot-rolled steel sheet.

In the hot rolling, the slab was first reduced in thickness to 20 mm by four passes corresponding to rough rolling, then reheated from 1000 °C to 1100 °C using an induction heater, and subsequently reduced in thickness to 1.2 mm by six passes corresponding to finish rolling. The rolling reduction rate in the final pass of rough rolling and the average heating rate in the reheating treatment were varied.

Here, in order to simulate low-speed hot rolling of thin slab casters, the entry-side speed in the first pass of rough rolling was 5 mpm, and the subsequent rolling speed was 130 mm/(entry-side sheet thickness) × 5 mpm. All passes of finish rolling were performed at 200 mpm.

The obtained hot-rolled steel sheet was subjected to hot-rolled sheet annealing at 1040 °C for 30 seconds, and then cold rolled to obtain a cold-rolled steel sheet with a final sheet thickness of 0.25 mm. The cold-rolled steel sheet was subjected to final annealing at 980 °C for 15 seconds to obtain a non-oriented electrical steel sheet. The arithmetic mean waviness Wa in the width direction of the non-oriented electrical steel sheet was measured using a contact roughness meter.

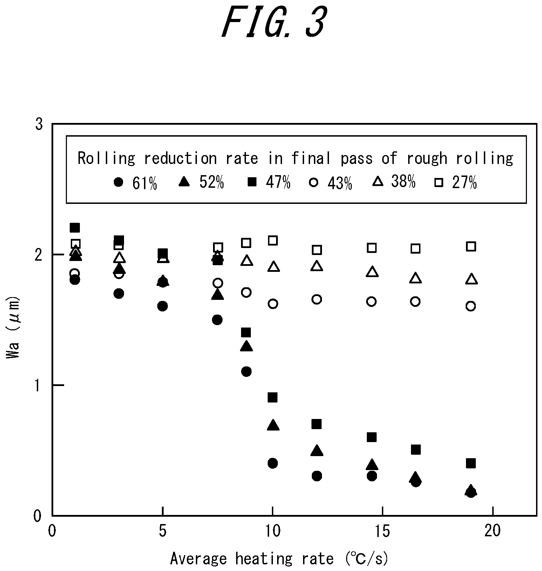

FIG. 3 illustrates the influence of the average heating rate in the reheating treatment and the rolling reduction rate in the final pass of rough rolling on Wa. As can be seen from FIG. 3, ridging was suppressed when the rolling reduction rate in the final pass of rough rolling was 45 % or more and the average heating rate during reheating was 9 °C/s or more.

The results of Experiments 1 and 2 demonstrate that ridging can be suppressed by increasing the rolling reduction rate in the final pass of rough rolling and increasing the average heating rate during reheating after rough rolling.

The mechanism by which ridging is suppressed is presumed to be as follows. First, high reduction rolling in the final pass of rough rolling causes strain energy to accumulate in the material. Then, subsequent rapid heating inhibits recovery during heating and effectively promotes recrystallization, so that the texture is randomized and the crystal grains are refined. As a result of the microstructure before finish rolling being refined, recrystallization and texture randomization are promoted even during finish rolling. Although it is not possible to fully complete the recrystallization of the material at the end of hot rolling, coarse cast microstructure which causes ridging is destroyed to some extent by the foregoing effect. Consequently, the texture is randomized and recrystallization during hot-rolled sheet annealing is promoted, and the formation of a ridging pattern during cold rolling is suppressed.

### (Experiment 3)

Next, we looked at the influence of the finish thickness in hot rolling on ridging, and conducted the following experiment in order to determine the influence. The "finish thickness" herein refers to the sheet thickness at the time of completion of finish rolling in the hot rolling process, i.e. the sheet thickness of the obtained hot-rolled steel sheet.

Slabs of 120 mm in thickness having a chemical composition containing C: 0.002 %, Si: 3.12 %, Al: 0.83 %, Mn: 0.56 %, Cr: 0.01 %, Ni: 0.02 %, Cu: 0.03 %, P: 0.01 %, S: 0.002 %, N: 0.002 %, O: 0.001 %, and Ti: 0.001 % with the balance consisting of Fe and inevitable impurities were each prepared by steelmaking in a vacuum melting furnace, taken out of the furnace, and then conveyed to an electric furnace so that the surface temperature of the slab would not fall below 800 °C. The slab was subjected to temperature holding treatment at 1100 °C for 30 minutes in the electric furnace, and then taken out of the electric furnace and hot rolled to obtain a hot-rolled steel sheet.

In the hot rolling, the slab was reduced in thickness to 15 mm by four passes corresponding to rough rolling, then reheated from 990 °C to 1100 °C using an induction heater, and subsequently reduced to the target sheet thickness by six passes corresponding to finish rolling. Here, in order to simulate low-speed hot rolling of thin slab casters, the entry-side speed in the first pass of rough rolling was 5 mpm, and the subsequent rolling speed was 130 mm/(entry-side sheet thickness) × 5 mpm. All passes of finish rolling were performed at 200 mpm.

The obtained hot-rolled steel sheet was subjected to hot-rolled sheet annealing at 1010 °C for 30 seconds, and then cold rolled to obtain a cold-rolled steel sheet with a final sheet thickness of 0.25 mm. The cold-rolled steel sheet was subjected to final annealing at 980 °C for 30 seconds to obtain a non-oriented electrical steel sheet. The arithmetic mean waviness Wa in the width direction of the non-oriented electrical steel sheet was measured using a contact roughness meter.

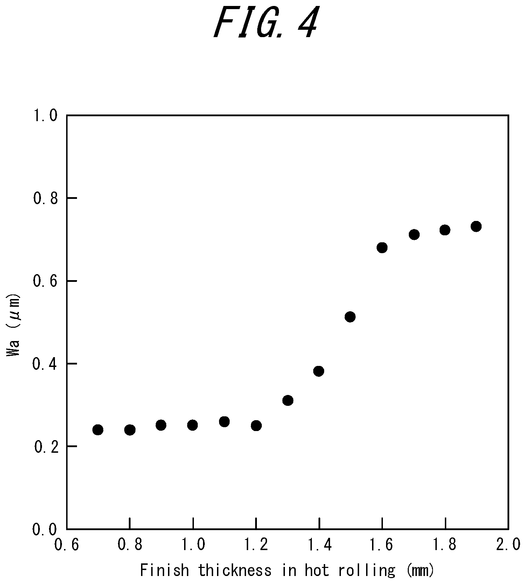

FIG. 4 illustrates the influence of the finish thickness in hot rolling on Wa. The results illustrated in FIG. 4 demonstrate that ridging can be further improved in the case where finish rolling is performed so that the hot-rolled steel sheet has a sheet thichness of 1.5 mm or less.

### (Experiment 4)

Next, we looked at the influence of inclusions on ridging, and conducted the following experiment in order to determine the influence.

Slabs of 120 mm in thickness having a chemical composition containing C: 0.002 %, Si: 3.51 %, Al: 1.23 %, Mn: 1.02 %, Cr: 0.05 %, Ni: 0.08 %, Cu: 0.11 %, P: 0.01 %, S: 0.002 %, N: 0.002 %, O: 0.001 %, and Ti: 0.001 % with the balance consisting of Fe and inevitable impurities were each prepared by steelmaking in a vacuum melting furnace. Here, the time from adding alloying elements to tapping and the thickness of the mold were adjusted to change the amount of inclusions floating up and the precipitation density, thus varying the size and number density of inclusions remaining in the steel.

The red-hot slab was taken out of the furnace, and then conveyed to an electric furnace so that the surface temperature of the slab would not fall below 800 °C. The slab was subjected to temperature holding treatment at 1100 °C for 30 minutes in the electric furnace, and then taken out of the electric furnace and hot rolled to obtain a hot-rolled steel sheet.

In the hot rolling, the slab was reduced in thickness to 10 mm by four passes corresponding to rough rolling, then reheated from 980 °C to 1100 °C using an induction heater, and subsequently reduced in thickness to 1.2 mm by six passes corresponding to finish rolling. Here, in order to simulate low-speed hot rolling of thin slab casters, the entry-side speed in the first pass of rolling was 5 mpm, and the subsequent rolling speed was 130 mpm/(entry-side sheet thickness) × 5 mpm.

Part of the obtained hot-rolled steel sheet was cut off and embedded in a carbon mold to create a sample. A plane of the sample perpendicular to a direction orthogonal to the rolling direction was observed using a scanning electron microscope (SEM) to investigate the size and number of inclusions.

Next, the obtained hot-rolled steel sheet was subjected to hot-rolled sheet annealing at 1040 °C for 30 seconds, and then cold rolled to obtain a cold-rolled steel sheet with a final sheet thickness of 0.25 mm. The cold-rolled steel sheet was subjected to final annealing at 980 °C for 15 seconds to obtain a non-oriented electrical steel sheet. The arithmetic mean waviness Wa in the width direction of the non-oriented electrical steel sheet was measured using a contact roughness meter.

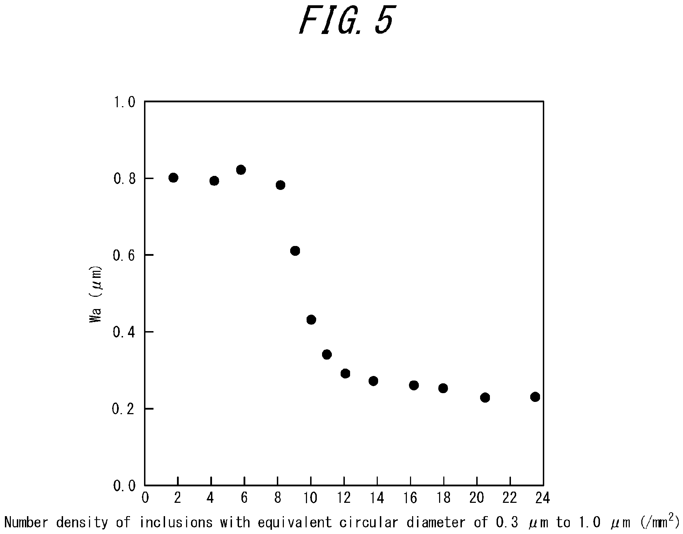

We examined the relationship between inclusions and ridging, and found that ridging is suppressed in the case where there are many inclusions of relatively small size. FIG. 5 illustrates the relationship between the number density of inclusions with an equivalent circular diameter of 0.3 µm or more and 1.0 µm or less in the hot-rolled steel sheet and Wa. Ridging tended to be further improved when the number density of the inclusions was 9/mm² or more.

The results of Experiments 3 and 4 demonstrate that ridging can be further suppressed by reducing the finish thickness in hot rolling and including inclusions of relatively small size.

Reducing the finish thickness in hot rolling is considered to have the effect of introducing shear strain in hot rolling to the center of the sheet thickness and further promoting recrystallization. Relatively small inclusions are considered to serve as nucleation sites when molten steel solidifies and contribute to refinement of the slab microstructure and randomization of the texture. Most of these small inclusions are oxides, whereas large inclusions are mainly AlN and MnS. It is presumed that large inclusions do not precipitate when molten steel solidifies and do not contribute to improvement of ridging.

The present disclosure is based on these discoveries. Embodiments of the present disclosure will be described in detail below, although the present disclosure is not limited to such embodiments.

### [Chemical composition]

The reasons for limiting the chemical composition of the steel slab in the present disclosure will be described.

### Si: 2.0 % to 5.0 %

Si is an element that has the effect of increasing the specific resistance of the steel sheet and reducing iron loss. In order to achieve this effect, the Si content is 2.0 % or more, and preferably 2.5 % or more. If the Si content is more than 5.0 %, industrial production by cold rolling is difficult. The Si content is therefore 5.0 % or less, and preferably 4.0 % or less.

### Al: 3.0 % or less

Al is an element that has the effect of increasing the specific resistance of the steel sheet and reducing iron loss. If the Al content is more than 3.0 %, however, cracking tends to occur during continuous casting. The Al content is therefore 3.0 % or less, and preferably 1.5 % or less. Although no lower limit is placed on the Al content, the Al content is preferably 0.00001 % or more because excessively reducing the Al content causes an increase in production costs. From the viewpoint of magnetic properties, the Al content is preferably 0.3 % or more. In the case where magnetic flux density is prioritized, the Al content is preferably 0.002 % or less.

### Total content of Si and Al: 3.5 % or more

From the viewpoint of increasing the specific resistance of the steel sheet and reducing iron loss, it is desirable to increase the Si content and the Al content. However, if the total content of Si and Al is 3.5 % or more, recrystallization during hot-rolled sheet annealing is inhibited and ridging tends to occur, as illustrated in FIG. 1. In the present disclosure, ridging can be suppressed even when the total content of Si and Al is 3.5 % or more, by performing hot rolling under certain conditions. Accordingly, in the present disclosure, the total content of Si and Al is 3.5 % or more.

In one embodiment of the present disclosure, the steel slab may have a chemical composition that contains Si: 2.0 % or more and 5.0 % or less and Al: 3.0 % or less with the balance consisting of Fe and inevitable impurities and in which the total content of Si and Al is 3.5 % or more.

In another embodiment of the present disclosure, the chemical composition of the steel slab may optionally further contain at least one of the following elements, in addition to Si and Al. In this case, the balance of the chemical composition consists of Fe and inevitable impurities. The following elements are all optionally added elements, and the lower limits of their contents may be 0 %.

### C: 0.005 % or less

In the case of adding C, the C content is 0.005 % or less from the viewpoint of preventing magnetic aging. If the C content is reduced excessively, magnetic flux density decreases. Therefore, from the viewpoint of preventing a decrease in magnetic flux density, the C content is preferably 0.001 % or more.

### Mn: 3.0 % or less

Mn is an element that has the effect of increasing the specific resistance of the steel sheet and further reducing iron loss. If the Mn content is more than 3.0 %, however, carbides precipitate and iron loss increases. Therefore, in the case of adding Mn, the Mn content is 3.0 % or less, and preferably 2.0 % or less. From the viewpoint of avoiding hot brittleness during hot rolling, the Mn content is preferably 0.05 % or more. From the viewpoint of magnetic properties, the Mn content is more preferably 0.3 % or more.

### Cr: 3.0 % or less

Cr is an element that has the effect of increasing the specific resistance of the steel sheet and reducing iron loss. If the Cr content is more than 3.0 %, however, carbides precipitate and iron loss increases. Therefore, in the case of adding Cr, the Cr content is 3.0 % or less. From the viewpoint of magnetic properties, the Cr content is preferably 1.5 % or less. Although no lower limit is placed on the Cr content, the Cr content is preferably 0.005 % or more from the viewpoint of enhancing the effect of adding Cr.

### Ni: 2.0 % or less

Ni is an element that has the effect of improving the magnetic flux density of the steel sheet. Ni is, however, an expensive element, and a Ni content of more than 2.0 % causes a significant cost increase. Therefore, in the case of adding Ni, the Ni content is 2.0 % or less. From the viewpoint of the balance between magnetic properties and cost, the Ni content is preferably 0.5 % or less. Although no lower limit is placed on the Ni content, the Ni content is preferably 0.005 % or more from the viewpoint of enhancing the effect of adding Ni.

### Cu: 2.0 % or less

Cu is an element that has the effect of improving the magnetic flux density of the steel sheet. If the Cu content is more than 2.0 %, however, hot brittleness occurs, causing surface defects. Therefore, in the case of adding Cu, the Cu content is 2.0 % or less. From the viewpoint of the balance between magnetic properties and cost, the Cu content is preferably 0.5 % or less. Although no lower limit is placed on the Cu content, the Cu content is preferably 0.005 % or more from the viewpoint of enhancing the effect of adding Cu.

### P: 0.2 % or less

P is an element used to adjust the strength of the steel sheet. If the P content is more than 0.2 %, however, the steel becomes brittle and cold rolling is hampered. Therefore, in the case of adding P, the P content is 0.2 % or less. From the viewpoint of the balance between strength enhancement and embrittlement, the P content is preferably 0.1 % or less. Although no lower limit is placed on the P content, the P content is preferably 0.005 % or more from the viewpoint of enhancing the effect of adding P.

### S: 0.0050 % or less

S is an element that forms sulfides and increases iron loss. Therefore, in the case of adding S, the S content is 0.0050 % or less, preferably 0.0020 % or less, and further preferably 0.0010 % or less. From the viewpoint of magnetic properties, a lower S content is better. Accordingly, the lower limit of the S content may be 0 %. However, since excessively reducing the S content causes an increase in production costs, the S content is preferably 0.0001 % or more from the viewpoint of cost.

### N: 0.0050 % or less

N is an element that forms nitrides and increases iron loss. Therefore, in the case of adding N, the N content is 0.0050 % or less, preferably 0.0030 % or less, and further preferably 0.0020 % or less. From the viewpoint of magnetic properties, a lower N content is better. Accordingly, the lower limit of the N content may be 0 %. However, since excessively reducing the N content causes an increase in production costs, the N content is preferably 0.0001 % or more from the viewpoint of cost.

### O: 0.0050 % or less

O is an element that forms oxides and increases iron loss. Therefore, in the case of adding O, the O content is 0.0050 % or less, preferably 0.0020 % or less, and further preferably 0.0010 % or less. From the viewpoint of magnetic properties, a lower O content is better. Accordingly, the lower limit of the O content may be 0 %. However, since excessively reducing the O content causes an increase in production costs, the O content is preferably 0.0001 % or more from the viewpoint of cost.

### Ti: 0.0040 % or less

Ti is an element that forms carbonitrides and increases iron loss. Therefore, in the case of adding Ti, the Ti content is 0.0040 % or less, preferably 0.0020 % or less, and further preferably 0.0010 % or less. From the viewpoint of magnetic properties, a lower Ti content is better. Accordingly, the lower limit of the Ti content may be 0 %. However, since excessively reducing the Ti content causes an increase in production costs, the Ti content is preferably 0.0001 % or more from the viewpoint of cost.

### Sn: 0.20 % or less

Sn is an element that has the effect of inhibiting nitridation and oxidation of the surface layer and reducing iron loss. If the Sn content is more than 0.20 %, however, the effect is saturated. Therefore, in the case of adding Sn, the Sn content is 0.20 % or less, and preferably 0.10 % or less. The Sn content is preferably 0.005 % or more from the viewpoint of enhancing the effect of adding Sn.

### Sb: 0.20 % or less

Sb is an element that has the effect of inhibiting nitridation and oxidation of the surface layer and reducing iron loss. If the Sb content is more than 0.20 %, however, the effect is saturated. Therefore, in the case of adding Sb, the Sb content is 0.20 % or less, and preferably 0.10 % or less. The Sb content is preferably 0.005 % or more from the viewpoint of enhancing the effect of adding Sb.

### Mo: 0.10 % or less

Mo is an element that has the effect of inhibiting nitridation and oxidation of the surface layer and reducing iron loss. If the Mo content is more than 0.10 %, however, iron loss increases. Therefore, in the case of adding Mo, the Mo content is 0.10 % or less, and preferably 0.05 % or less. The Mo content is preferably 0.001 % or more from the viewpoint of enhancing the effect of adding Mo.

### Ca: 0.01 % or less

Ca is an element that inhibits the formation of fine oxides and sulfides and reduces iron loss. If the Ca content is more than 0.01 %, however, the effect is saturated. Therefore, in the case of adding Ca, the Ca content is 0.01 % or less, and preferably 0.006 % or less. The Ca content is preferably 0.001 % or more from the viewpoint of enhancing the effect of adding Ca.

### REM: 0.05 % or less

REM (rare earth metal) is a component that inhibits the formation of fine sulfides and reduces iron loss. If the REM content is more than 0.05 %, however, the effect is saturated. Therefore, in the case of adding REM, the REM content is 0.05 % or less, and preferably 0.03 % or less. The REM content is preferably 0.005 % or more from the viewpoint of enhancing the effect of adding REM.

### Mg: 0.01 % or less

Mg is an element that inhibits the formation of fine sulfides and reduces iron loss. If the Mg content is more than 0.01 %, however, the effect is saturated. Therefore, in the case of adding Mg, the Mg content is 0.01 % or less, and preferably 0.006 % or less. The Mg content is preferably 0.001 % or more from the viewpoint of enhancing the effect of adding Mg.

### Zn: 0.01 % or less

Zn is an element that inhibits the formation of fine oxides and sulfides and reduces iron loss. If the Zn content is more than 0.01 %, however, the effect is saturated. Therefore, in the case of adding Zn, the Zn content is 0.01 % or less, and preferably 0.005 % or less. The Zn content is preferably 0.001 % or more from the viewpoint of enhancing the effect of adding Zn.

The chemical composition of the steel slab may optionally further contain at least one of the following elements. The following elements are all optionally added elements, and the lower limits of their contents may be 0 %.

### Nb: 0.005 % or less

Nb is an element that forms fine carbonitrides and increases iron loss. This adverse effect is noticeable particularly when the Nb content is more than 0.005 %. Therefore, in the case of adding Nb, the Nb content is 0.005 % or less, and preferably 0.002 % or less. From the viewpoint of magnetic properties, a lower Nb content is better. Accordingly, the lower limit of the Nb content may be 0 %. However, since excessively reducing the Nb content causes an increase in production costs, the Nb content is preferably 0.00001 % or more from the viewpoint of cost.

### V: 0.02 % or less

V is an element that forms fine carbonitrides and increases iron loss. This adverse effect is noticeable particularly when the V content is more than 0.02 %. Therefore, in the case of adding V, the V content is 0.02 % or less, and preferably 0.005 % or less. From the viewpoint of magnetic properties, a lower V content is better. Accordingly, the lower limit of the V content may be 0 %. However, since excessively reducing the V content causes an increase in production costs, the V content is preferably 0.0001 % or more from the viewpoint of cost.

### Ta: 0.002 % or less

Ta is an element that forms fine carbonitrides and increases iron loss. This adverse effect is noticeable particularly when the Ta content is more than 0.002 %. Therefore, in the case of adding Ta, the Ta content is 0.002 % or less, and preferably 0.001 % or less. From the viewpoint of magnetic properties, a lower Ta content is better. Accordingly, the lower limit of the Ta content may be 0 %. However, since excessively reducing the Ta content causes an increase in production costs, the Ta content is preferably 0.00001 % or more from the viewpoint of cost.

### B: 0.002 % or less

B is an element that forms fine nitrides and increases iron loss. This adverse effect is noticeable particularly when the B content is more than 0.002 %. Therefore, in the case of adding B, the B content is 0.002 % or less, and preferably 0.001 % or less. From the viewpoint of magnetic properties, a lower B content is better. Accordingly, the lower limit of the B content may be 0 %. However, since excessively reducing the B content causes an increase in production costs, the B content is preferably 0.00001 % or more from the viewpoint of cost.

### Ga: 0.005 % or less

Ga is an element that forms fine nitrides and increases iron loss. This adverse effect is noticeable particularly when the Ga content is more than 0.005 %. Therefore, in the case of adding Ga, the Ga content is 0.005 % or less, and preferably 0.002 % or less. From the viewpoint of magnetic properties, a lower Ga content is better. Accordingly, the lower limit of the Ga content may be 0 %. However, since excessively reducing the Ga content causes an increase in production costs, the Ga content is preferably 0.00001 % or more from the viewpoint of cost.

### Pb: 0.002 % or less

Pb is an element that forms fine Pb particles and increases iron loss. This adverse effect is noticeable particularly when the Pb content is more than 0.002 %. Therefore, in the case of adding Pb, the Pb content is 0.002 % or less, and preferably 0.001 % or less. From the viewpoint of magnetic properties, a lower Pb content is better. Accordingly, the lower limit of the Pb content may be 0 %. However, since excessively reducing the Pb content causes an increase in production costs, the Pb content is preferably 0.00001 % or more from the viewpoint of cost.

### W: 0.05 % or less

W is an element that forms fine carbides and increases iron loss. This adverse effect is noticeable particularly when the W content is more than 0.05 %. Therefore, in the case of adding W, the W content is 0.05 % or less, and preferably 0.02 % or less. From the viewpoint of magnetic properties, a lower W content is better. Accordingly, the lower limit of the W content may be 0 %. However, since excessively reducing the W content causes an increase in production costs, the W content is preferably 0.00001 % or more from the viewpoint of cost.

### Ge: 0.05 % or less

Ge is an element that has the effect of improving magnetic flux density and reducing iron loss. If the Ge content is more than 0.05 %, however, the effect of adding Ge is saturated. Therefore, in the case of adding Ge, the Ge content is 0.05 % or less, and preferably 0.01 % or less. Although no lower limit is placed on the Ge content, the Ge content is preferably 0.0001 % or more from the viewpoint of enhancing the effect of adding Ge.

### As: 0.05 % or less

As is an element that has the effect of improving magnetic flux density and reducing iron loss. If the As content is more than 0.05 %, however, the effect of adding As is saturated. Therefore, in the case of adding As, the As content is 0.05 % or less, and preferably 0.01 % or less. Although no lower limit is placed on the As content, the As content is preferably 0.0001 % or more from the viewpoint of enhancing the effect of adding As.

### Co: 0.05 % or less

Co is an element that has the effect of improving magnetic flux density and reducing iron loss. If the Co content is more than 0.05 %, however, the effect of adding Co is saturated. Therefore, in the case of adding Co, the Co content is 0.05 % or less, and preferably 0.01 % or less. Although no lower limit is placed on the Co content, the Co content is preferably 0.0001 % or more from the viewpoint of enhancing the effect of adding Co.

### [Production conditions for hot-rolled steel sheet for non-oriented electrical steel sheet]

Next, production conditions when producing a hot-rolled steel sheet for a non-oriented electrical steel sheet using a steel slab having the above-described chemical composition will be described.

A method of producing a hot-rolled steel sheet for a non-oriented electrical steel sheet in one embodiment of the present disclosure includes: a continuous casting process of producing a steel slab by continuous casting; a conveyance process of conveying the steel slab to a hot rolling line while maintaining the surface temperature of the steel slab at 800 °C or more; and a hot rolling process of sequentially subjecting the steel slab to rough rolling, reheating treatment, and finish rolling in the hot rolling line to obtain a hot-rolled steel sheet. Each of the processes will be described below.

### - Continuous casting process

First, a steel slab having the above-described chemical composition is produced by continuous casting (continuous casting process). The method of continuous casting is not limited, and continuous casting may be performed according to a conventional method. The method of adjusting the composition of molten steel used in continuous casting is not limited, and any method may be used. For example, the composition of the molten steel may be adjusted using a converter, an electric furnace, a vacuum degasser, and any other device and method.

### Thickness of steel slab: 50 mm to 200 mm

In the continuous casting process, a steel slab with a thickness of 50 mm or more and 200 mm or less is produced. If the thickness of the steel slab is less than 50 mm, the rolling reduction rate in the hot rolling process is excessively low, making it impossible to sufficiently promote recrystallization. If the thickness of the steel slab is more than 200 mm, equipment costs increase.

### - Conveyance process

The steel slab produced in the continuous casting process is then conveyed to a hot rolling line (conveyance process). The present disclosure is directed to hot direct rolling, and the steel slab is conveyed to the hot rolling line while maintaining its surface temperature at 800 °C or more in the conveyance process. In other words, in the present disclosure, the steel slab produced in the continuous casting process is conveyed to the hot rolling line without its surface temperature falling below 800 °C.

In the present disclosure, the steel slab obtained in the continuous casting process is fed to the hot rolling process while maintaining its temperature at a high temperature of 800 °C or more. Thus, the steel slab need not be reheated before hot rolling, with it being possible to significantly reduce energy costs. In such hot direct rolling, the occurrence of ridging is problematic. In the present disclosure, ridging can be suppressed by controlling the hot rolling conditions as described later.

Before hot rolling, temperature holding (soaking) treatment may be performed in which the steel slab is held at a temperature of 1000 °C or more and 1300 °C or less for 60 seconds or more. Through such temperature holding treatment, MnS and AlN can be coarsened to further improve iron loss. The heating method in the temperature holding treatment is not limited, and any method such as induction heating, gas furnace, or electric furnace may be used.

### - Hot rolling

Subsequently, the steel slab is sequentially subjected to rough rolling, reheating treatment, and finish rolling in the hot rolling line to obtain a hot-rolled steel sheet (hot rolling process). In the present disclosure, it is important to perform the hot rolling process under the following conditions (1) to (4):
(1) the delivery-side speed of the rough rolling: 100 mpm or less
(2) the rolling reduction rate in the final pass of the rough rolling: 45 % or more
(3) the average heating rate in the reheating treatment: 9 °C/s or more
(4) the temperature rise in the reheating treatment: 30 °C or more.

### Delivery-side speed of rough rolling: 100 mpm or less

Although hot direct rolling is excellent in terms of energy saving, the hot rolling speed decreases because the sheet passing speed is limited by the casting speed, as mentioned earlier. As shown in Experiment 1 above, ridging occurs noticeably when the delivery-side speed in the final pass of rough rolling is 100 mpm or less. In the present disclosure, by controlling the rolling reduction rate in the final pass of rough rolling and the reheating treatment conditions, ridging can be suppressed even when the delivery-side speed of rough rolling is 100 mpm or less. Hence, in the present disclosure, the delivery-side speed of rough rolling is 100 mpm or less, and preferably 70 mpm or less. Thus, the present disclosure can both reduce energy consumption and suppress ridging.

Such a delivery-side speed is achieved, for example, in the case where a cast steel slab is continuously hot rolled without being cut. This is because the hot rolling speed is limited by the casting speed. In a conventional process in which a steel slab is cut and then hot rolled, on the other hand, the speed of rough hot rolling is typically more than 100 mpm from the viewpoint of production efficiency.

Although no lower limit is placed on the delivery-side speed, if the delivery-side speed is excessively low, productivity decreases. Accordingly, the delivery-side speed is preferably 10 mpm or more and more preferably 15 mpm or more.

### Rolling reduction rate in final pass of rough rolling: 45 % or more

Setting the rolling reduction rate in the final pass of rough rolling to 45 % or more is effective for suppressing ridging. If the rolling reduction rate is less than 45 %, sufficient strain energy does not accumulate in the material and recrystallization is not promoted sufficiently. Therefore, the rolling reduction rate in the final pass of rough rolling is 45 % or more, and preferably 55 % or more. Although no upper limit is placed on the rolling reduction rate, for example, the rolling reduction rate may be 80 % or less, 75 % or less, or 70 % or less.

The delivery-side temperature of rough rolling is not limited, but is preferably 850 °C to 1000 °C and more preferably 900 °C to 950 °C.

After the rough rolling, reheating treatment is performed prior to finish rolling. By performing the reheating treatment, it is possible to raise the temperature of the material and lower the deformation resistance during finish rolling. The heating method in the reheating treatment is not limited, and any method such as induction heating, gas furnace, or electric furnace may be used.

### Average heating rate in reheating treatment: 9 °C/s or more

In order to suppress ridging, the average heating rate in the reheating treatment is 9 °C/s or more, and preferably 12 °C/s or more. If the average heating rate is less than 9 °C/s, the strain accumulated in the material during rough rolling recovers during heating. This makes it impossible to sufficiently promote recrystallization and significantly suppress ridging. Although no upper limit is placed on the average heating rate, if the average heating rate is excessively high, high-output heating equipment is required, causing an increase in equipment costs. The average heating rate is therefore preferably 100 °C/s or less, more preferably 50 °C/s or less, and further preferably 20 °C/s or less from the viewpoint of equipment costs.

### Temperature rise in reheating treatment: 30 °C or more

If the temperature rise by the reheating is less than 30 °C, recrystallization is not promoted sufficiently and ridging cannot be suppressed. Accordingly, in the reheating treatment, the temperature is raised by 30 °C or more and preferably 50 °C or more. Although no upper limit is placed on the temperature rise, if the temperature rise is more than 200 °C, production costs increase considerably. The temperature rise is therefore preferably 200 °C or less from the viewpoint of cost.

The heating temperature (arrival temperature) in the reheating treatment is not limited, but is preferably 1000 °C to 1200 °C from the viewpoint of further suppressing ridging.

After the reheating treatment, finish rolling is performed. The conditions of finish rolling are not limited, and finish rolling may be performed according to a conventional method.

The finish temperature in the hot rolling is not limited, but is preferably 900 °C or less from the viewpoint of stabilizing the shape and suppressing oxidation. Although no lower limit is placed on the finish temperature, the finish temperature is preferably 600 °C or more.

### Finish thickness: 1.5 mm or less

The finish rolling is preferably performed so that the resulting hot-rolled steel sheet will have a sheet thickness (finish thickness) of 1.5 mm or less. As a result of the finish thickness being 1.5 mm or less, sufficient shear strain is introduced to the center of the sheet thickness during hot rolling and recrystallization is further promoted, so that ridging can be further suppressed. The finish thickness is more preferably 1.3 mm or less. Although no lower limit is placed on the finish thickness, if the finish thickness is excessively thin, the hot-rolled coil will end up being excessively long, causing an increase in sheet passing costs in hot-rolled sheet annealing and pickling lines. The finish thickness is therefore preferably 0.4 mm or more.

A hot-rolled steel sheet for a non-oriented electrical steel sheet can be obtained through the foregoing procedure. It is preferable to, after the hot rolling process, coil the obtained hot-rolled steel sheet. The coiling temperature is not limited, but is preferably 700 °C or less from the viewpoint of stabilizing the shape and suppressing oxidation. Although no lower limit is placed on the coiling temperature, the coiling temperature is preferably 400 °C or more.

### Number density of inclusions: 9/mm² or more

As a result of the number density of inclusions with an equivalent circular diameter of 0.3 µm or more and 1.0 µm or less in the hot-rolled steel sheet being 9/mm² or more, ridging can be further suppressed. The number density of the inclusions is measured by observing a section of the hot-rolled steel sheet perpendicular to a direction orthogonal to the rolling direction using a SEM. In the measurement, the equivalent circular diameter is calculated from the area of each observed inclusion. The area of the observation field is desirably 10 mm² or more.

Relatively small inclusions with an equivalent circular diameter of 0.3 µm or more and 1.0 µm or less are considered to serve as nucleation sites when molten steel solidifies and contribute to refinement of the slab microstructure and randomization of the texture. Inclusions with an equivalent circular diameter of more than 1.0 µm do not have the effect of suppressing ridging. Inclusions with an equivalent circular diameter of less than 0.3 µm are excluded because they are difficult to observe and quantify using a SEM. Since inclusions with an equivalent circular diameter of less than 0.3 µm are commonly considered to strongly inhibit grain boundary migration, it is desirable to reduce such inclusions as much as possible from the viewpoint of iron loss reduction.

The number density is more preferably 12/mm² or more. Although no upper limit is placed on the number density, the number density is preferably 1000/mm² or less and more preferably 600/mm² or less from the viewpoint of suppressing the adverse effect on iron loss.

### [Production conditions for non-oriented electrical steel sheet]

A method of producing a non-oriented electrical steel sheet in one embodiment of the present disclosure includes: a hot-rolled steel sheet production process of producing a hot-rolled steel sheet by the above-described production method; a hot-rolled sheet annealing process of subjecting the hot-rolled steel sheet to hot-rolled sheet annealing; a cold rolling process of subjecting the hot-rolled steel sheet to cold rolling to obtain a cold-rolled steel sheet; and a final annealing process of subjecting the cold-rolled steel sheet to final annealing.

The hot-rolled sheet annealing, cold rolling, and final annealing processes are not limited and may be performed according to conventional methods.

The soaking temperature in the hot-rolled sheet annealing is not limited, but is preferably 900 °C to 1100 °C. The soaking time is not limited, but is preferably 1 second to 300 seconds. The atmosphere in the hot-rolled sheet annealing is not limited, and any atmosphere may be used. As the atmosphere, for example, an atmosphere containing at least one selected from the group consisting of N₂, H₂, Ar, CO, CO₂, and H₂O is preferable, and an atmosphere consisting of at least one selected from the group consisting of N₂, H₂, Ar, CO, CO₂, and H₂O is more preferable.

The cold rolling may be performed using any mill without limitation. As the mill, any of a tandem mill and a reverse mill may be used. The sheet thickness at the entry side in the cold rolling is preferably 0.5 mm to 3 mm. The sheet thickness at the delivery side in the cold rolling is preferably 0.1 mm to 0.5 mm. Warm rolling may be employed from the viewpoint of improving magnetic properties and preventing fracture. For example, it is advantageous to set the material temperature during rolling to 100 °C to 300 °C.

The soaking temperature in the final annealing is not limited, but is preferably 800 °C to 1100 °C. The soaking time is not limited, but is preferably 1 second to 300 seconds. The final annealing is preferably performed in a non-oxidizing atmosphere, from the viewpoint of preventing oxidation of the material. As the non-oxidizing atmosphere, for example, an atmosphere consisting of at least one selected from the group consisting of H₂, N₂, and Ar is preferable. The dew point of the atmosphere is preferably controlled to -30 °C or less.

It is preferable to perform pickling after the hot-rolled sheet annealing and before the cold rolling. It is also preferable to form an insulating coating on the surface of the obtained non-oriented electrical steel sheet after the final annealing. The pickling and insulating coating formation are not limited and may be performed according to conventional methods.

### EXAMPLES

### (Example 1)

Steel slabs of 150 mm in thickness having a chemical composition containing C: 0.0011 %, Si: 3.34 %, Al: 0.82 %, Mn: 0.45 %, Cr: 0.10 %, Ni: 0.01 %, Cu: 0.03 %, P: 0.01 %, S: 0.0005 %, N: 0.0012 %, O: 0.001 %, and Ti: 0.0005 % with the balance consisting of Fe and inevitable impurities were each produced by continuous casting. In the production of the steel slab, the number and size of inclusions were adjusted by adjusting the time from adding a deoxidizing element to molten steel to casting and the cooling rate of the slab immediately after solidification.

The steel slab was then conveyed to a hot rolling line. In the conveyance, a tunnel type gas furnace was used and temperature holding treatment was performed under the conditions shown in Table 1. The surface temperature of the steel slab immediately before being introduced into the gas furnace was 980 °C, and the line speed was 4 mpm. In one example, temperature holding treatment was not performed for comparison. In all examples, the surface temperature of the steel slab was maintained at 800 °C or more until it was conveyed to the hot rolling line.

The steel slab was then sequentially subjected to rough rolling, reheating treatment, and finish rolling in the hot rolling line to obtain a hot-rolled steel sheet. Specifically, first, the steel slab was reduced to the delivery-side sheet thickness shown in Table 1 by four passes of rough rolling. The delivery-side speed of rough rolling and the rolling reduction rate in the final pass of rough rolling are shown in Table 1. After this, reheating to 1120 °C was performed using an induction heater. The average heating rate and the temperature rise in the reheating are shown in Table 1. Subsequently, five passes of finish rolling were performed to reduce the thickness to the finish thickness shown in Table 1. The obtained hot-rolled steel sheet was then coiled.

From the continuous casting until the completion of the coiling after the hot rolling, sheet passing was continuously performed without cutting the material. In all conditions, the cooling conditions were adjusted so that the hot-rolling finish temperature would be 900 °C or less and the coiling temperature would be 700 °C or less.

### (Number density of inclusions)

The number density of inclusions with an equivalent circular diameter of 0.3 µm or more and 1.0 µm or less in the obtained hot-rolled steel sheet was measured. Specifically, first, the hot-rolled steel sheet was cut to collect a test piece. The test piece was then embedded in a carbon mold, and its plane perpendicular to a direction orthogonal to the rolling direction was observed using a SEM to investigate the size and number of inclusions. The equivalent circular diameter was calculated from the area of each observed inclusion, and the number density of inclusions with an equivalent circular diameter of 0.3 µm or more and 1.0 µm or less was determined. The measurement results are shown in Table 1.

Next, a non-oriented electrical steel sheet was produced using the hot-rolled steel sheet. Specifically, the hot-rolled steel sheet was first subjected to hot-rolled sheet annealing at 1010 °C for 20 seconds to obtain a hot-rolled and annealed sheet. The hot-rolled and annealed sheet was then cold rolled to obtain a cold-rolled steel sheet with a final sheet thickness of 0.20 mm. The cold-rolled steel sheet was subjected to final annealing at 1000 °C for 20 seconds to obtain a non-oriented electrical steel sheet (final annealed sheet).

In order to evaluate the occurrence of ridging, the arithmetic mean waviness Wa in the width direction of the non-oriented electrical steel sheet was measured using a contact roughness meter. Further, in order to evaluate the magnetic properties, the iron loss W_{10/400} (W/kg) at a magnetic flux density of 1.0 T and a frequency of 400 Hz was measured by Epstein testing. The measurement results are shown in Table 1.

As can be seen from the results shown in Table 1, in each example satisfying the conditions according to the present disclosure, the iron loss property was good and Wa was as low as 1.0 µm or less, that is, ridging was suppressed. Here, the iron loss property was evaluated as good in the case where the iron loss W_{10/400} (W/kg) was less than or equal to 28 × (final sheet thickness (mm)) + 5.5.

### [Table 1]

**Table 1**

| No. | Production conditions | | | | | | | Hot-rolled steel sheet | Non-oriented electrical steel sheet | | Remarks |
|---|---|---|---|---|---|---|---|---|---|---|---|
| | Temperature holding treatment | Rough hot rolling | | | Reheating treatment | | Finish rolling | Number density of inclusions (/mm²) | Ridging | Iron loss | |
| | | Delivery-side sheet thickness (mm) | Delivery-side speed (mpm) | Final pass rolling reduction rate (%) | Average heating rate (°C/s) | Temperature rise (°C) | Finish thickness (mm) | | Wa (µm) | W_{10/400} (W/kg) | |
| 1 | 1100°C×20min | 40 | 15 | 56 | 16 | 70 | 1.3 | 36 | 0.29 | 10.5 | Example |
| 2 | 1100°C×20min | 20 | 30 | 58 | 14 | 80 | 1.1 | 25 | 0.23 | 10.3 | Example |
| 3 | 1100°C×20min | 10 | 60 | 59 | 15 | 90 | 1.1 | 25 | 0.23 | 10.3 | Example |
| 4 | 1100°C×20min | 10 | 60 | 59 | 45 | 90 | 1.1 | 25 | 0.22 | 10.3 | Example |
| 5 | 1100°C×20min | 10 | 60 | 59 | 95 | 90 | 1.1 | 25 | 0.22 | 10.3 | Example |
| 6 | 1250°C×10min | 20 | 30 | 65 | 17 | 40 | 0.8 | 31 | 0.19 | 10.1 | Example |
| 7 | 980°C×30min | 20 | 30 | 61 | 16 | 100 | 1.3 | 28 | 0.21 | 10.3 | Example |
| 8 | Not performed | 20 | 30 | 55 | 14 | 110 | 1.4 | 28 | 0.35 | 10.8 | Example |
| 9 | 1100°C×20min | 20 | 30 | 68 | 15 | 80 | 1.1 | 26 | 0.21 | 10.2 | Example |
| 10 | 1100°C×20min | 20 | 30 | 46 | 16 | 80 | 1.1 | 25 | 0.31 | 10.3 | Example |
| 11 | 1100°C×20min | 20 | 30 | 42 | 15 | 80 | 1.1 | 26 | 1.21 | 10.3 | Comparative Example |
| 12 | 1100°C×20min | 20 | 30 | 34 | 14 | 80 | 1.1 | 26 | 1.86 | 10.4 | Comparative Example |
| 13 | 1100°C×20min | 10 | 60 | 59 | 12 | 90 | 1.1 | 25 | 0.28 | 10.3 | Example |
| 14 | 1100°C×20min | 10 | 60 | 59 | 10 | 90 | 1.1 | 27 | 0.42 | 10.2 | Example |
| 15 | 1100°C×20min | 10 | 60 | 59 | 8 | 90 | 1.1 | 23 | 1.12 | 10.4 | Comparative Example |
| 16 | 1100°C×20min | 10 | 60 | 59 | 6 | 90 | 1.1 | 24 | 1.76 | 10.3 | Comparative Example |
| 17 | 1100°C×20min | 10 | 60 | 59 | 15 | 40 | 1.1 | 26 | 0.42 | 10.3 | Example |
| 18 | 1100°C×20min | 10 | 60 | 59 | 15 | 27 | 1.1 | 25 | 1.08 | 10.3 | Comparative Example |
| 19 | 1100°C×20min | 10 | 60 | 59 | 15 | 20 | 1.1 | 26 | 1.56 | 10.3 | Comparative Example |
| 20 | 1100°C×20min | 10 | 60 | 59 | 15 | 90 | 1.7 | 25 | 0.65 | 10.6 | Example |
| 21 | 1100°C×20min | 10 | 60 | 59 | 15 | 90 | 1.4 | 26 | 0.31 | 10.4 | Example |
| 22 | 1100°C×20min | 10 | 60 | 59 | 16 | 110 | 0.8 | 29 | 0.21 | 10.1 | Example |
| 23 | 1100°C×20min | 10 | 60 | 59 | 17 | 130 | 0.6 | 28 | 0.19 | 9.9 | Example |
| 24 | 1100°C×20min | 10 | 60 | 59 | 15 | 90 | 1.1 | 563 | 0.18 | 10.5 | Example |
| 25 | 1100°C×20min | 10 | 60 | 59 | 15 | 90 | 1.1 | 128 | 0.22 | 10.4 | Example |
| 26 | 1100°C×20min | 10 | 60 | 59 | 15 | 90 | 1.1 | 10 | 0.34 | 10.3 | Example |
| 27 | 1100°C×20min | 10 | 60 | 59 | 15 | 90 | 1.1 | 8 | 0.65 | 10.3 | Example |
| 28 | 1100°C×20min | 10 | 60 | 59 | 15 | 90 | 1.1 | 5 | 0.83 | 10.3 | Example |
| 29 | 1100°C×20min | 10 | 60 | 59 | 15 | 90 | 1.1 | 963 | 0.16 | 10.8 | Example |

### (Example 2)

Steel slabs having the compositions shown in Tables 2 to 4 were each produced by continuous casting. In the production of the steel slab, the number and size of inclusions were adjusted by adjusting the time from adding a deoxidizing element to molten steel to casting and the cooling rate of the slab immediately after solidification.

The steel slab was then conveyed to a hot rolling line. In the conveyance, a tunnel type electric furnace was used and temperature holding treatment at 1100 °C for 15 minutes was performed. The surface temperature of the steel slab immediately before being introduced into the electric furnace was 1050 °C, and the line speed was 3 mpm. In all examples, the surface temperature of the steel slab was maintained at 800 °C or more until it was conveyed to the hot rolling line.

The steel slab was then sequentially subjected to rough rolling, reheating treatment, and finish rolling in the hot rolling line to obtain a hot-rolled steel sheet. Specifically, first, the steel slab was reduced in thickness to 10 mm by four passes of rough rolling. The rolling reduction rate in the final pass of rough rolling was 58 %. After this, reheating treatment was performed using an induction heater. The average heating rate in the temperature range of 1010 °C to 1080 °C in the reheating treatment was 14 °C/s. Subsequently, six passes of finish rolling were performed to reduce the thickness to a finish thickness of 1.2 mm. The obtained hot-rolled steel sheet was then coiled.

From the continuous casting until the completion of the coiling after the hot rolling, sheet passing was continuously performed without cutting the material. In all conditions, the cooling conditions were adjusted so that the hot-rolling finish temperature would be 900 °C or less and the coiling temperature would be 700 °C or less.

The number density of inclusions with an equivalent circular diameter of 0.3 µm or more and 1.0 µm or less in the obtained hot-rolled steel sheet was determined by the same method as in Example 1. The measurement results are shown in Tables 2 to 4.

Next, a non-oriented electrical steel sheet was produced using the hot-rolled steel sheet. Specifically, the hot-rolled steel sheet was first subjected to hot-rolled sheet annealing at 1040 °C for 40 seconds to obtain a hot-rolled and annealed sheet. The hot-rolled and annealed sheet was then cold rolled to obtain a cold-rolled steel sheet with a final sheet thickness of 0.25 mm. The cold-rolled steel sheet was subjected to final annealing at 980 °C for 10 seconds to obtain a non-oriented electrical steel sheet (final annealed sheet).

The arithmetic mean waviness Wa and iron loss W_{10/400} in the obtained non-oriented electrical steel sheet were measured by the same methods as in Example 1. The measurement results are shown in Tables 2 to 4.

As can be seen from the results shown in Tables 2 to 4, in each example satisfying the conditions according to the present disclosure, the iron loss property was good and Wa was as low as 1.0 µm or less, that is, ridging was suppressed. Here, the iron loss property was evaluated as good in the case where the iron loss W_{10/400} (W/kg) was less than or equal to 28 × (final sheet thickness (mm)) + 5.5. In Comparative Example No. 58, fracture occurred during the cold rolling process due to excessively high Si content, and a non-oriented electrical steel sheet could not be obtained. In Comparative Example No. 59, breakout occurred during continuous casting due to excessively high Al content, and a non-oriented electrical steel sheet could not be obtained.

### [Table 2]

**Table 2**

| No. | Chemical composition (mass%)* | | | | | | | | | | | | | | Hot-rolled steel sheet | Non-oriented electrical steel sheet | | Remarks |
|---|---|---|---|---|---|---|---|---|---|---|---|---|---|---|---|---|---|---|
| | Si | Al | [Si]+[Al] | C | Mn | P | S | N | O | Cr | Ni | Cu | Ti | Others | Number density of inclusions (/mm²) | Ridging | Iron loss | |
| | | | | | | | | | | | | | | | | Wa (µm) | w10/400 (W/kg) | |
| 30 | 4.31 | 0.62 | 4.93 | 0.0015 | 0.61 | <0.01 | 0.0009 | 0.0012 | 0.0009 | 0.02 | 0.01 | 0.01 | 0.0012 | - | 35 | 0.33 | 10.9 | Example |
| 31 | 3.32 | 0.85 | 4.17 | 0.0023 | 0.31 | 0.01 | 0.0008 | 0.0011 | 0.0011 | <0.01 | 0.02 | 0.03 | 0.0015 | - | 39 | 0.28 | 11.6 | Example |
| 32 | 2.81 | 0.81 | 3.62 | 0.0008 | 0.45 | 0.01 | 0.0007 | 0.0015 | 0.0012 | 0.01 | 0.02 | 0.01 | 0.0013 | - | 28 | 0.24 | 12.2 | Example |
| 33 | 3.32 | 1.62 | 4.94 | 0.0017 | 0.42 | 0.01 | 0.0005 | 0.0013 | 0.0012 | 0.02 | <0.01 | 0.02 | 0.0015 | - | 34 | 0.26 | 11.1 | Example |
| 34 | 2.15 | 2.67 | 4.82 | 0.0013 | 0.45 | <0.01 | 0.0006 | 00009 | 0.0011 | 0.01 | 0.05 | 0.06 | 0.0014 | - | 39 | 0.23 | 11.3 | Example |
| 35 | 3.37 | 0.78 | 4.15 | 0.0041 | 0.44 | 0.01 | 0.0005 | 0.0005 | 0.0016 | 0.02 | 0.06 | 0.02 | 0.0013 | - | 33 | 0.24 | 11.7 | Example |
| 36 | 3.35 | 0.82 | 4.17 | 0.0018 | 1.72 | 0.01 | 0.0005 | 0.0014 | 0.0008 | 0.05 | 0.01 | 0.02 | 0.0012 | - | 33 | 0.23 | 11.3 | Example |
| 37 | 3.31 | 0.83 | 4.14 | 0.0019 | 2.56 | 0.01 | 0.0007 | 0.0012 | 0.0009 | 0.02 | 0.01 | 0.02 | 0.0011 | - | 34 | 0.23 | 10.9 | Example |
| 38 | 3.75 | 0.0005 | 3.75 | 0.0022 | 0.03 | 0.09 | 0.0005 | 0.0008 | 0.0023 | 0.12 | 0.13 | 0.15 | 0.0003 | - | 46 | 0.26 | 12.1 | Example |
| 39 | 3.32 | 0.82 | 4.14 | 0.0011 | 0.45 | 0.01 | 0.0036 | 0.0014 | 0.0015 | <0.01 | 0.03 | 0.04 | 0.0016 | - | 36 | 0.24 | 12.2 | Example |
| 40 | 3.45 | 0.86 | 4.31 | 0.0018 | 0.51 | 0.02 | 0.0059 | 0.0016 | 0.0015 | 0.05 | 0.06 | 0.02 | 0.0011 | - | 36 | 0.36 | 13.2 | Example |
| 41 | 3.35 | 0.82 | 4.17 | 0.0012 | 0.46 | 0.01 | 0.0005 | 0.0038 | 0.0014 | 0.02 | <0.01 | 0.02 | 0.0013 | - | 34 | 0.25 | 12.1 | Example |
| 42 | 3.34 | 0.81 | 4.15 | 0.0011 | 0.45 | 0.01 | 0.0006 | 0.0013 | 0.0037 | 0.01 | 0.02 | 0.06 | 0.0011 | - | 38 | 0.27 | 12.2 | Example |
| 43 | 3.35 | 0.82 | 4.17 | 0.0011 | 0.42 | 0.02 | 0.0008 | 0.0012 | 0.0016 | 1.23 | 0.02 | 0.05 | 0.0016 | - | 36 | 0.21 | 11.4 | Example |
| 44 | 3.41 | 0.83 | 4.24 | 0.0009 | 0.43 | 0.01 | 0.0008 | 0.0009 | 0.0011 | 2.46 | 0.03 | 0.05 | 0.0013 | - | 31 | 0.22 | 10.9 | Example |
| 45 | 3.31 | 0.81 | 4.12 | 0.0013 | 0.41 | 0.01 | 0.0006 | 0.0016 | 0.0014 | 0.01 | 0.82 | 0.06 | 0.0026 | - | 33 | 0.19 | 11.5 | Example |
| 46 | 3.32 | 0.85 | 4.17 | 0.0014 | 0.49 | 0.02 | 0.0008 | 0.0013 | 0.0012 | 0.06 | 1.65 | <0.01 | 0.0011 | - | 36 | 0.23 | 11.1 | Example |
| 47 | 3.35 | 0.82 | 4.17 | 0.0011 | 0.46 | 0.01 | 0.0005 | 0.0014 | 0.0009 | 0.01 | 0.02 | 0.82 | 0.0008 | - | 34 | 0.24 | 11.4 | Example |
| 48 | 3.36 | 0.82 | 4.18 | 0.0012 | 0.41 | 0.01 | 0.0007 | 0.0012 | 0.0015 | 0.02 | 0.01 | 1.36 | 0.0012 | - | 35 | 0.25 | 11.2 | Example |
| 49 | 3.32 | 0.82 | 4.14 | 0.0015 | 0.42 | 0.01 | 0.0009 | 0.0011 | 0.0016 | 0.01 | 0.03 | 0.05 | 0.0035 | - | 39 | 0.28 | 12.2 | Example |
| 50 | 3.31 | 0.78 | 4.09 | 0.0011 | 0.42 | 0.02 | 0.0008 | 0.0011 | 0.0015 | 0.06 | 0.05 | 0.02 | 0.0065 | - | 36 | 0.46 | 13.3 | Example |

| | | | | | | | | | | | | | | | | | | |
|---|---|---|---|---|---|---|---|---|---|---|---|---|---|---|---|---|---|---|
| * Balance consisting of Fe and inevitable impurities | | | | | | | | | | | | | | | | | | |

### [Table 3]

**Table 3**

| No. | Chemical composition (mass%)* | | | | | | | | | | | | | | Hot-rolled steel sheet | Non-oriented electrical steel sheet | | Remarks |
|---|---|---|---|---|---|---|---|---|---|---|---|---|---|---|---|---|---|---|
| | Si | Al | [Si]+[Al] | C | Mn | P | S | N | O | Cr | Ni | Cu | Ti | Others | Number density of inclusions (/mm²) | Ridging | Iron loss | |
| | | | | | | | | | | | | | | | | Wa (µm) | W_{10/400} (W/kg) | |
| 51 | 3.35 | 0.86 | 4.21 | 0.0015 | 0.45 | 0.02 | 0.0009 | 0.0013 | 0.0019 | 0.02 | 0.02 | <0.01 | 0.0013 | Sn: 0.07 | 35 | 0.24 | 11.2 | Example |
| 52 | 3.41 | 0.81 | 4.22 | 0.0012 | 0.41 | 0.01 | 0.0008 | 0.0014 | 0.0016 | 0.01 | 0.01 | 0.03 | 0.0010 | Sb: 0.06 | 33 | 0.23 | 11.3 | Example |
| 53 | 3.38 | 0.83 | 4.21 | 0.0011 | 0.46 | 0.01 | 0.0004 | 0.0012 | 0.0009 | 0.02 | 0.01 | 0.02 | 0.0012 | Mo: 0.05 | 32 | 0.21 | 11.4 | Example |
| 54 | 3.32 | 0.82 | 4.14 | 0.0013 | 0.42 | 0.01 | 0.0005 | 0.0016 | 0.0016 | 0.01 | 0.03 | 0.05 | 0.0010 | Ca: 0.004 | 37 | 0.26 | 11.3 | Example |
| 55 | 3.36 | 0.86 | 4.22 | 0.0015 | 0.45 | 0.01 | 0.0011 | 0.0012 | 0.0021 | 0.01 | 0.02 | 0.02 | 0.0008 | REM: 0.02 | 36 | 0.28 | 11.4 | Example |
| 56 | 3.35 | 0.85 | 4.20 | 0.0014 | 0.46 | 0.02 | 0.0015 | 0.0011 | 0.0016 | 0.02 | 0.01 | 0.02 | 0.0009 | Mg: 0.001 | 34 | 0.25 | 11.4 | Example |
| 57 | 3.34 | 0.82 | 4.16 | 0.0012 | 0.43 | 0.01 | 0.0012 | 0.0015 | 0.0011 | 0.01 | 0.01 | 0.03 | 0.0011 | Zn: 0.0005 | 39 | 0.24 | 11.3 | Example |
| 58 | 5.13 | 0.3 | 5.43 | 0.0011 | 0.46 | <0.01 | 0.0008 | 0.0013 | 0.0012 | 0.02 | 0.01 | 0.01 | 0.0006 | - | - | - | - | Comparative Example |
| 59 | 2.13 | 3.16 | 5.29 | 0.0005 | 0.45 | 0.01 | 0.0009 | 0.0011 | 0.0009 | 0.01 | 0.02 | 0.01 | 0.0009 | - | - | - | - | Comparative Example |
| 60 | 1.82 | 1.52 | 3.34 | 0.0008 | 0.46 | 0.01 | 0.0006 | 0.0009 | 0.0008 | 0.01 | 0.01 | 0.02 | 0.0007 | - | 36 | 0.22 | 13.3 | Comparative Example |
| 61 | 4.31 | 0.62 | 4.93 | <0.0005 | <0.01 | <0.01 | <0.0005 | <0.0005 | <0.0005 | <0.01 | <0.01 | <0.01 | <0.0005 | - | 13 | 0.65 | 11.3 | Example |
| 62 | 4.31 | 0.62 | 4.93 | 0.0008 | <0.01 | <0.01 | <0.0005 | <0.0005 | <0.0005 | <0.01 | <0.01 | <0.01 | <0.0005 | - | 12 | 0.63 | 11.2 | Example |
| 63 | 4.31 | 0.62 | 4.93 | <0.0005 | 0.45 | <0.01 | <0.0005 | <0.0005 | <0.0005 | <0.01 | <0.01 | <0.01 | <0.0005 | - | 14 | 0.66 | 10.9 | Example |
| 64 | 4.31 | 0.62 | 4.93 | <0.0005 | <0.01 | 0.01 | <0.0005 | <0.0005 | <0.0005 | <0.01 | <0.01 | <0.01 | <0.0005 | - | 13 | 0.66 | 11.3 | Example |
| 65 | 4.31 | 0.62 | 4.93 | <0.0005 | <0.01 | <0.01 | 0.0007 | <0.0005 | <0.0005 | <0.01 | <0.01 | <0.01 | <0.0005 | - | 18 | 0.52 | 11.2 | Example |
| 66 | 4.31 | 0.62 | 4.93 | <0.0005 | <0.01 | <0.01 | <0.0005 | 0.0015 | <0.0005 | <0.01 | <0.01 | <0.01 | <0.0005 | - | 21 | 0.49 | 11.2 | Example |
| 67 | 4.31 | 0.62 | 4.93 | <0.0005 | <0.01 | <0.01 | <0.0005 | <0.0005 | 0.0012 | <0.01 | <0.01 | <0.01 | <0.0005 | - | 23 | 0.48 | 11.3 | Example |
| 68 | 4.31 | 0.62 | 4.93 | <0.0005 | <0.01 | <0.01 | <0.0005 | <0.0005 | <0.0005 | 0.01 | <0.01 | <0.01 | <0.0005 | - | 14 | 0.63 | 11.2 | Example |
| 69 | 4.31 | 0.62 | 4.93 | <0.0005 | <0.01 | <0.01 | <0.0005 | <0.0005 | <0.0005 | <0.01 | 0.02 | <0.01 | <0.0005 | - | 13 | 0.66 | 11.3 | Example |
| 70 | 4.31 | 0.62 | 4.93 | <0.0005 | <0.01 | <0.01 | <0.0005 | <0.0005 | <0.0005 | <0.01 | <0.01 | 0.01 | <0.0005 | - | 12 | 0.64 | 11.3 | Example |
| 71 | 4.31 | 0.62 | 4.93 | <0.0005 | <0.01 | <0.01 | <0.0005 | <0.0005 | <0.0005 | <0.01 | <0.01 | <0.01 | 0.0013 | - | 13 | 0.67 | 11.4 | Example |

| | | | | | | | | | | | | | | | | | | |
|---|---|---|---|---|---|---|---|---|---|---|---|---|---|---|---|---|---|---|
| * Balance consisting of Fe and inevitable impurities | | | | | | | | | | | | | | | | | | |

### [Table 4]

**Table 4**

| No. | Chemical composition (mass%)* | | | | | | | | | | | | | | Hot-rolled steel sheet | Non-oriented electrical steel sheet | | Remarks |
|---|---|---|---|---|---|---|---|---|---|---|---|---|---|---|---|---|---|---|
| | Si | Al | [Si]+[Al] | C | Mn | P | S | N | O | Cr | Ni | Cu | Ti | Others | Number density of inclusions (/mm²) | Ridging | Iron loss | |
| | | | | | | | | | | | | | | | | Wa (µm) | W_{10/400} (W/kg) | |
| 72 | 3.32 | 0.86 | 4.18 | 0.0021 | 0.31 | 0.01 | 0.0006 | 0.0010 | 0.0012 | 0.03 | 0.02 | 0.04 | 0.0012 | Nb: 0.0045 | 39 | 0.27 | 12.2 | Example |
| 73 | 3.32 | 0.86 | 4.18 | 0.0022 | 0.29 | 0.01 | 0.0007 | 0.0014 | 0.0014 | 0.02 | 0.02 | 0.03 | 0.0011 | V: 0.019 | 39 | 0.27 | 12.0 | Example |
| 74 | 3.32 | 0.86 | 4.18 | 0.0023 | 0.30 | 0.01 | 0.0008 | 0.0014 | 0.0013 | 0.02 | 0.03 | 0.02 | 0.0010 | Ta: 0.0017 | 38 | 0.26 | 12.1 | Example |
| 75 | 3.34 | 0.84 | 4.18 | 0.0020 | 0.31 | 0.01 | 0.0011 | 0.0013 | 0.0014 | 0.02 | 0.02 | 0.01 | 0.0010 | B: 0.0018 | 39 | 0.27 | 12.1 | Example |
| 76 | 3.33 | 0.86 | 4.19 | 0.0021 | 0.30 | 0.01 | 0.0008 | 0.0015 | 0.0011 | 0.01 | 0.03 | 0.04 | 0.0009 | Ga: 0.0045 | 38 | 0.28 | 12.0 | Example |
| 77 | 3.33 | 0.86 | 4.19 | 0.0020 | 0.30 | 0.01 | 0.0009 | 0.0014 | 0.0012 | 0.01 | 0.01 | 0.02 | 0.0013 | Pb: 0.0019 | 39 | 0.27 | 12.2 | Example |
| 78 | 3.32 | 0.85 | 4.17 | 0.0021 | 0.30 | 0.01 | 0.0009 | 0.0009 | 0.0010 | 0.04 | 0.03 | 0.02 | 0.0013 | W: 0.045 | 40 | 0.29 | 12.1 | Example |
| 79 | 3.32 | 0.84 | 4.16 | 0.0023 | 0.30 | 0.01 | 0.0008 | 0.0014 | 0.0015 | 0.01 | 0.03 | 0.04 | 0.0010 | Ge: 0.046 | 38 | 0.27 | 11.5 | Example |
| 80 | 3.31 | 0.86 | 4.17 | 0.0021 | 0.31 | 0.01 | 0.0007 | 0.0012 | 0.0013 | 0.02 | 0.02 | 0.02 | 0.0010 | As: 0.043 | 38 | 0.29 | 11.4 | Example |
| 81 | 3.34 | 0.86 | 4.20 | 0.0025 | 0.30 | 0.01 | 0.0006 | 0.0014 | 0.0013 | 0.03 | 0.02 | 0.04 | 0.0011 | Co: 0.048 | 40 | 0.29 | 11.4 | Example |

| | | | | | | | | | | | | | | | | | | |
|---|---|---|---|---|---|---|---|---|---|---|---|---|---|---|---|---|---|---|
| * Balance consisting of Fe and inevitable impurities | | | | | | | | | | | | | | | | | | |

## Claims

1. A method of producing a hot-rolled steel sheet for a non-oriented electrical steel sheet, the method comprising:
producing a steel slab with a thickness of 50 mm or more and 200 mm or less by continuous casting, the steel slab having a chemical composition that contains, in mass%, Si: 2.0 % or more and 5.0 % or less and Al: 3.0 % or less and in which a total content of Si and Al is 3.5 % or more;
conveying the steel slab to a hot rolling line while maintaining a surface temperature of the steel slab at 800 °C or more; and
performing hot rolling in which the steel slab is sequentially subjected to rough rolling, reheating treatment, and finish rolling in the hot rolling line to obtain a hot-rolled steel sheet,
wherein the hot rolling is performed under the following conditions (1) to (4):
(1) a delivery-side speed of the rough rolling: 100 mpm or less,
(2) a rolling reduction rate in a final pass of the rough rolling: 45 % or more,
(3) an average heating rate in the reheating treatment: 9 °C/s or more, and
(4) a temperature rise in the reheating treatment: 30 °C or more.

2. The method of producing a hot-rolled steel sheet for a non-oriented electrical steel sheet according to claim 1, wherein the finish rolling is performed so that the hot-rolled steel sheet has a sheet thichness of 1.5 mm or less.

3. The method of producing a hot-rolled steel sheet for a non-oriented electrical steel sheet according to claim 1 or 2, wherein the chemical composition of the steel slab further contains, in mass%, at least one selected from the group consisting of
C: 0.005 % or less,
Mn: 3.0 % or less,
Cr: 3.0 % or less,
Ni: 2.0 % or less,
Cu: 2.0 % or less,
P: 0.2 % or less,
S: 0.0050 % or less,
N: 0.0050 % or less,
O: 0.0050 % or less,
Ti: 0.0040 % or less,
Sn: 0.20 % or less,
Sb: 0.20 % or less,
Mo: 0.10 % or less,
Ca: 0.01 % or less,
REM: 0.05 % or less,
Mg: 0.01 % or less, and
Zn: 0.01 % or less,
with a balance consisting of Fe and inevitable impurities.

4. The method of producing a hot-rolled steel sheet for a non-oriented electrical steel sheet according to claim 3, wherein the chemical composition further contains, in mass%, at least one selected from the group consisting of
Nb: 0.005 % or less,
V: 0.02 % or less,
Ta: 0.002 % or less,
B: 0.002 % or less,
Ga: 0.005 % or less,
Pb: 0.002 % or less,
W: 0.05 % or less,
Ge: 0.05 % or less,
As: 0.05 % or less, and
Co: 0.05 % or less.

5. A method of producing a non-oriented electrical steel sheet, the method comprising:
producing a hot-rolled steel sheet by the method of producing a hot-rolled steel sheet for a non-oriented electrical steel sheet according to any one of claims 1 to 4;
subjecting the hot-rolled steel sheet to hot-rolled sheet annealing;
subjecting the hot-rolled steel sheet to cold rolling to obtain a cold-rolled steel sheet; and
subjecting the cold-rolled steel sheet to final annealing.

6. A hot-rolled steel sheet for a non-oriented electrical steel sheet obtainable by the method of producing a hot-rolled steel sheet for a non-oriented electrical steel sheet according to any one of claims 1 to 4,
wherein a number density of inclusions with an equivalent circular diameter of 0.3 µm or more and 1.0 µm or less is 9/mm² or more.
